# EUROPEAN PATENT APPLICATION

(11) **EP 1 691 294 A1**
(43) Date of publication of application: **16.08.2006**
(21) Application number: 04799823.2
(22) Date of filing: 18.11.2004
(51) Int. Cl.: G06F 12/14, G11B 20/10, H04N 7/173

(54) **INFORMATION RECORDING APPARATUS, CONTROL PROGRAM AND RECORDING MEDIUM**

(30) Priority: 02.12.2003 JP 2003403464
(71) Applicant: Konica Minolta Photo Imaging, Inc., Shinjuku-ku, Tokyo 163-0512 (JP)
(72) Inventor: UEDA, Yutaka,c/o Konica Minolta Photo Imaging, Inc, Hachioji-shi, Tokyo 192-8505 (JP); TAKEMURA, Koji, Konica Minolta Photo Imaging, Inc., Hachioji-shi, Tokyo 192-8505 (JP)
(74) Representative: Rees, Alexander Ellison
(86) International application number: PCT/JP2004/017535
(87) International publication number: WO 2005/055066

(57) **Abstract**

The information recording apparatus is at least provided with an identification means 12 for reading the utilization license information from the recording medium, and for identifying whether the recording medium is a recording medium for which the utilization of the music data is permitted, the music data obtaining means 13 for connecting to the server through the communication network, and for requiring the download of the music data to the server, an input output means 11 for selecting the musical composition or for reproducing the music data, and a data recording means 18 for recording the downloaded music data in the recording medium, and without complicated operation, the music data can simply be recorded in the recording medium.

## Description

### FIELD OF THE INVENTION

The present invention relates to an information recording apparatus, control program and recording medium.

### BACKGROUND ART

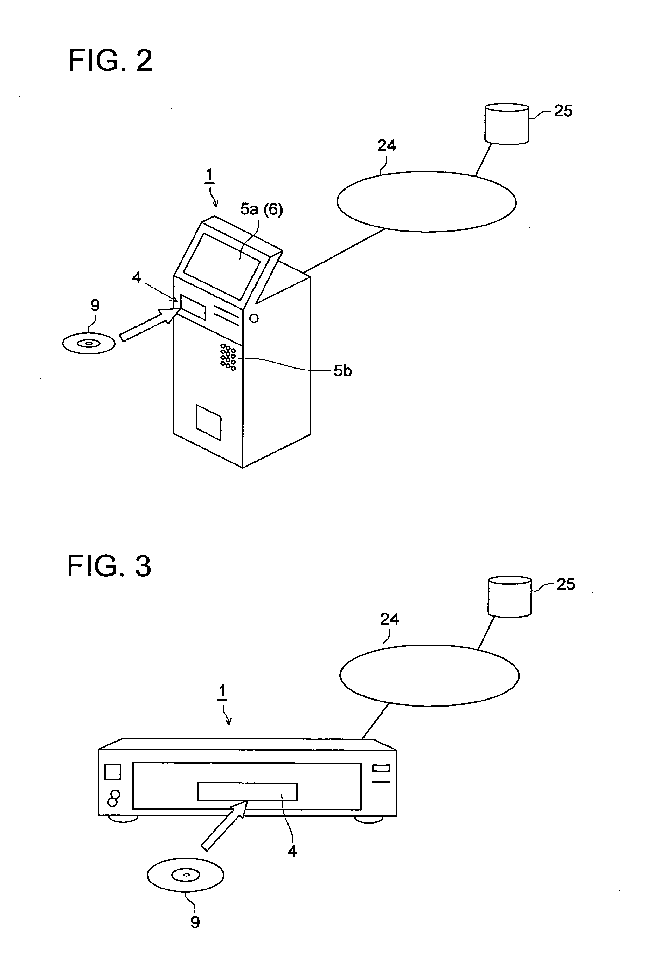

Recently, it becomes a present state that various services relating to photography are provided. For example, the user takes a picture by a digital camera, the digital camera in which an image data of the photography is recorded or a medium for the digital camera is bought into a photographic shop such as a mini-lab, and by using a unmanned terminal (kiosk) or a shop terminal, provided in the shop, the image data recorded in the digital camera or medium can be written in a recording medium such as CD-R, DVD-R (for example, Tokkaihei No. 5-182373 (fourth-sixth pages, Fig. 3)).

Further, the user takes a picture by a film camera, and when exposed film is brought to a photographic shop such as a mini-lab, a service in which, after the photographic shop develops the film, the image data is read by using a reading device such as a scanner, written in a recording medium such as CD-R, DVD-R, and provided to the user, is also conducted.

Further, a service in which, in the image data read from the digital camera or media, film, a file format is converted so that it can be reproduced by an image reproduction device such as, for example, a DVD player or a DVD recorder, and the original image data and the converted image data are written in a recording medium such as CD-R, DVD-R, is also conducted.

Then, the user inserts the recording medium in which the image data is written into a personal computer, displays the image data by using an application such as the slide-show program installed in the personal computer, or inserts the recording medium into an image reproducing device, and can display a moving image data made based on the image data.

Recently, the contents data such as the music data can be simply downloaded through the internet, and when the music data together with the image data can also be recorded in the recording medium, the slide-show with the music can be reproduced by using the recording medium, or the moving image data made by using the image data and the music data can be reproduced, and the utility value of the recording medium can be enhanced.

However, when the music data is downloaded from a music delivery server, because the rate is charged to the download, when the user information or the rate payment method is not previously registered, the download service can be used, and the procedure becomes complicate.

Particularly, in the case of the user unused to the operation of the personal computer, it is difficult that the user conducts the above procedure by himself, and it becomes a hindrance of the promotion of utilization of the service. Further, in the case of the image data based on the photographic image photographed by user himself, the user can copy without limitation, however, in the case of the music data, because it is proscribed that the music data is copied without allowance due to the setting of copyright, it is also necessary that the measure by which the music data recorded in the recording medium can not be unfairly copied, is provided.

### DISCLOSURE THE INVENTION

The present invention is attained in view of the above problem, and the main object is to provide an information recording apparatus, a control program and a recording medium by which the music data can be offered by a simple operation, further, the unfair copy of the obtained music data can be appropriately prevented.

In order to attain the above object, in the recording medium of the present invention, the utilization license information showing that the download or streaming of the music data stored in a specific server is permitted, is recorded.

Further, the program of the present invention functions the computer as a means by which the utilization license information recorded in the recording medium is read, and by which it is identified whether the recording medium is a recording medium for which the download of the music stored in the specific server is permitted, and when it is the permitted recording medium, a means for requiring the download of the music data to the server.

In the present invention, the computer can be made the structure to be further functioned as a means for inputting the image data, and as a means for making a predetermined format of the moving image data based on the music data which is downloaded, and the image data, and a means for recording at least one of the music data, the image data, and the moving image data, in the recording medium, and the recording means can also be made the structure in which a dummy data for operating the specific program by which the music data is reproduced, is recorded.

Further, the program of the present invention functions the computer as a means by which the utilization license information recorded in the recording medium is read, and by which it is identified whether the recording medium is a recording medium for which the streaming of the music data stored in the specific server is permitted, and when it is the permitted recording medium, a means for requiring the streaming of the data to the server.

The present invention can make the computer a structure to function it as a means for recording the history information for specifying the music data which is further streamed, and as a means for permitting the steaming to the music data specified by the history information.

Further, in the present invention, the computer can also be made a structure to function it as a means for selecting the music data to be downloaded or conducted the streaming from the music data stored in the server.

Further, the program of the present invention functions the computer as a means by which the utilization license information showing that the download or streaming of the specific music data stored in the specific server is permitted, is received, and a means for connecting the specific server and the transmission origin of the utilization license information so that the download or streaming of the specific music data can be conducted.

Further, the information recording apparatus of the present invention at least provides with a means for reading the utilization license information recorded in the recording medium, and for identifying whether the recording medium is the recording medium for which the download of the music data stored in the specific server is permitted, and when it is the permitted recording medium, a means for requiring the download of the music data to the server, and a means for recording the downloaded music data in the recording medium.

Further, the information recording apparatus of the present invention at least provides with a means for reading the utilization license information recorded in the recording medium, and for identifying whether the recording medium is a recording medium for which the streaming of the music data stored in the specific server is permitted, and when it is the permitted recording medium, a means for requiring the streaming of the music data to the server, and a means for reproducing the music data sent from the server in the reproducing means.

As described above, in the recording medium of the present invention, the utilization license information showing that the recording medium is a medium for which the use of the music data is permitted, is recorded, and in the information recording apparatus, the utilization license information is read from the recording medium, and it is identified whether the recording medium is a medium for which the use of the music data is permitted, and when it is a recording medium for which the use of the music data is permitted, the apparatus is automatically connected to the music delivering server and requires the download or streaming of a predetermined music data or the music data selected by the user. Hereby, it is made in such a manner that the music data can be simply used. Further, in the case where the music data is recorded, when it is converted into a predetermined format data which can not be copied by the personal computer, or the copy prevention data for operating the specific program is recorded, the unfair copy of the downloaded music data can be securely prevented.

### BRIEF DESCRIPTION OF THE DRAWINGS

Fig. 1 is an outline view showing the structure of an information recording apparatus according to the first example of the present invention.
Fig. 2 is an outline view showing another structure of the information recording apparatus according to the first example of the present invention.
Fig. 3 is an outline view showing another structure of the information recording apparatus according to the first example of the present invention.
Fig. 4 is an outline view showing the other structure of the information recording apparatus according to the first example of the present invention.
Fig. 5 is an outline view showing the other structure of the information recording apparatus according to the first example of the present invention.
Fig. 6 is an outline view showing the other structure of the information recording apparatus according to the first example of the present invention.
Fig. 7 is a block diagram showing a function of the information recording apparatus according to the first example of the present invention.
Fig. 8 is a flowchart showing a recording sequence of the data by using the information recording apparatus according to the first example of the present invention.
Fig. 9 is a flowchart showing a recording sequence of the data by using the information recording apparatus according to the first example of the present invention.
Fig. 10 is an outline view showing the structure of an information recording apparatus according to the second example of the present invention.
Fig. 11 is a block diagram showing the function of an information recording apparatus according to the second example of the present invention.
Fig. 12 is a flowchart showing a recording sequence of the data by using the information recording apparatus according to the second example of the present invention.
Fig. 13 is a block diagram showing the function of the information recording apparatus according to the third example of the present invention.
Fig. 14 is a flowchart showing a recording sequence of the data by using the information recording apparatus according to the third example of the present invention.
Fig. 15 is a block diagram showing the function of the information recording apparatus according to the fourth example of the present invention.
Fig. 16 is a flowchart showing a recording sequence of the data by using the information recording apparatus according to the fourth example of the present invention.

### BEST MODE FOR CARRYING OUT THE INVENTION

An information recording apparatus according to the present invention provides with, in its preferred embodiment, an identifying means for reading a utilization license information from a recording medium, and for identifying whether the recording medium is a medium for which the use of the music data is permitted, a music data obtaining means which is connected to a server through a communication network, and for requiring the download or streaming to the server, an input output means for selecting the music composition or reproducing the music data, and a data recording means for recording the downloaded music data in the recording medium. Hereby, without conducting the complicate operation, the music data can be simply recorded in the recording medium, or can be reproduced in a pronunciation means. Further, when the music data is converted into a predetermined format data and recorded, and the copy prevention data for operating a specific program is recorded, the unfair copy of the music data can be surely prevented.

### [Example 1]

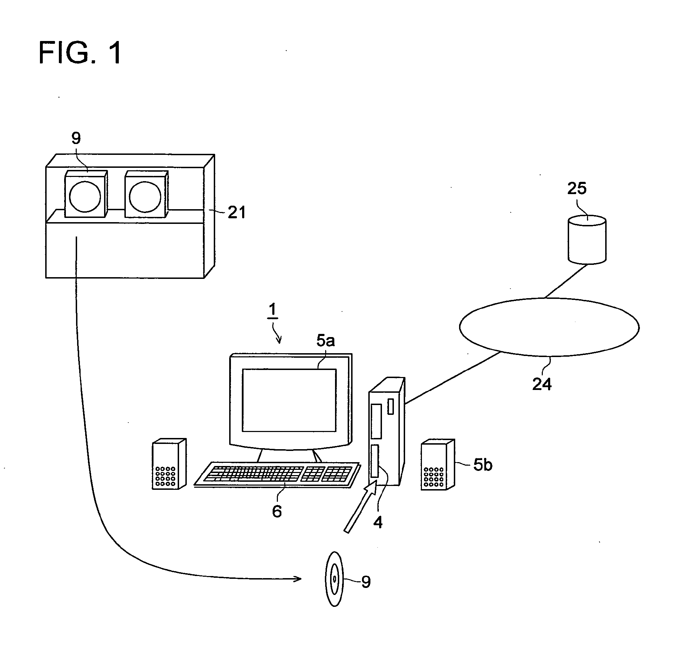

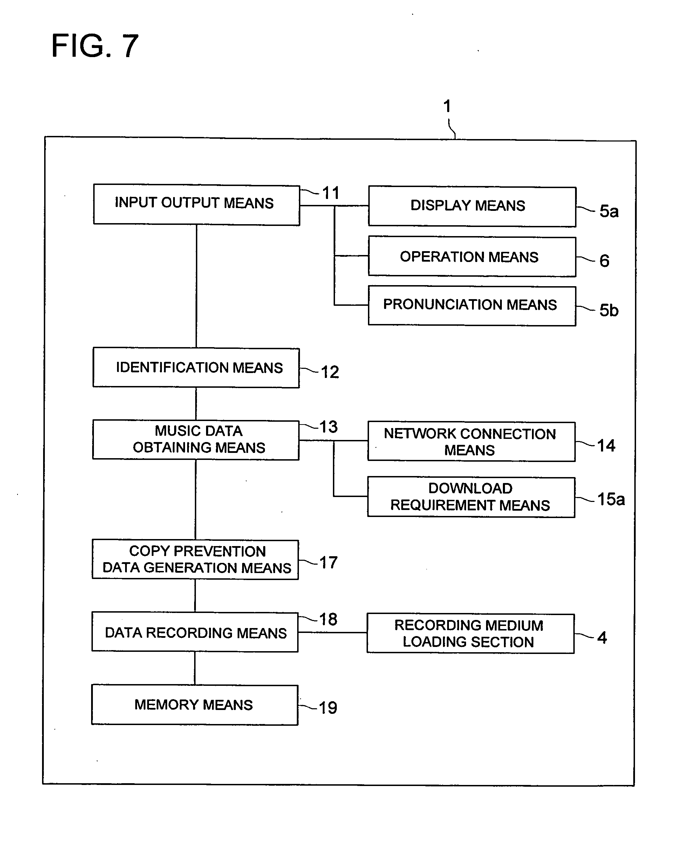

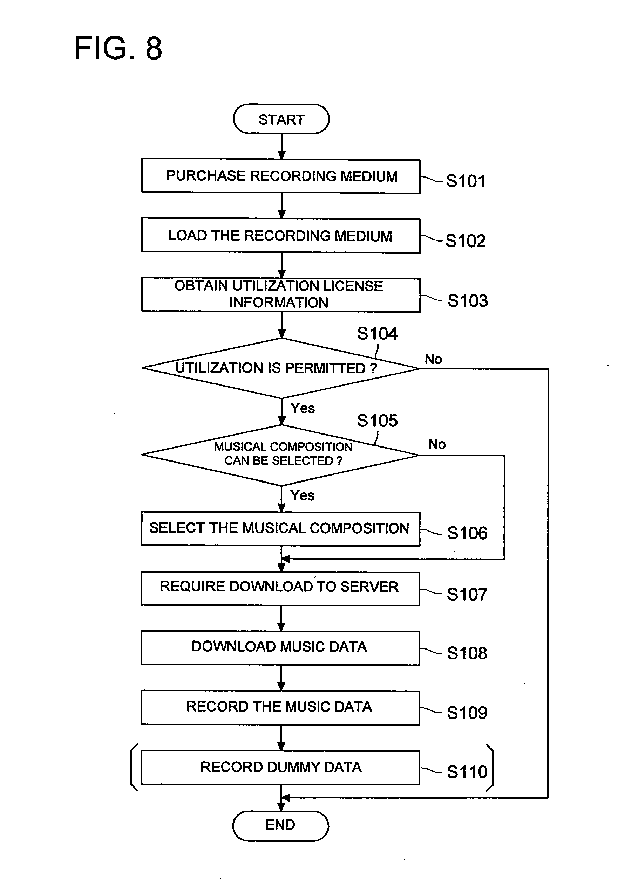

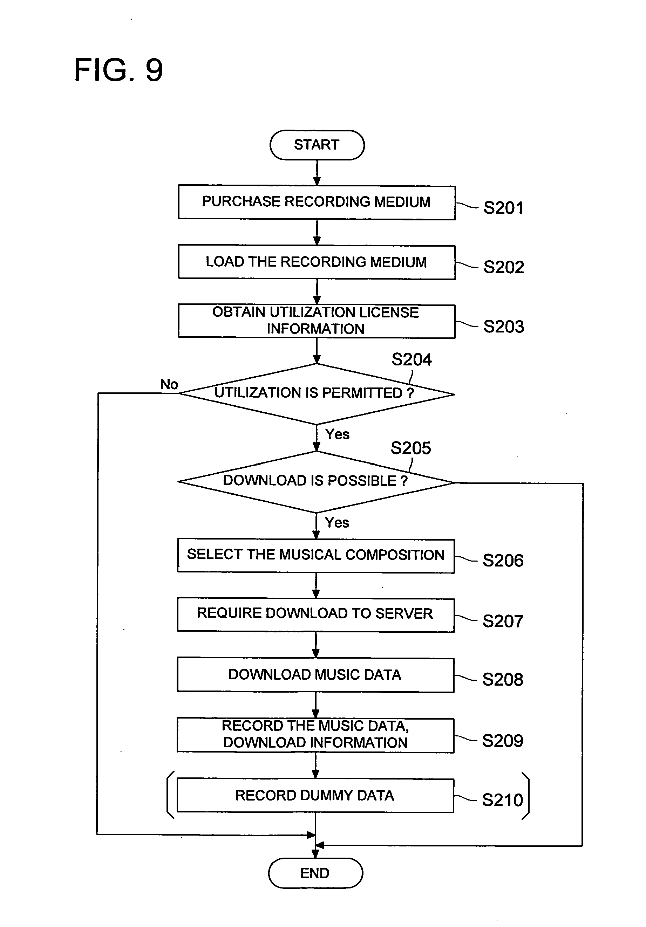

In order to explain in detail the above embodiment, an information recording apparatus, a control program and a recording medium according to the first example of the present invention, will be described below referring to Fig. 1 to Fig. 9. Fig. 1 to Fig. 6 are views typically showing the structure of the information recording apparatus according to the present example, Fig. 7 is a block diagram showing a function of the information recording apparatus. Further, Fig. 8 and Fig. 9 are flowcharts showing a utilization sequence of the music data of the present example.

An information recording apparatus 1 of the present example provides with a network connection means for connecting to a server 25 through a communication network 24 such as internet, a recording medium loading section 4 for loading a recording medium 9 such as CD-R/RW or DVD ± R/RW, DVD-RAM, Blue-ray disk for recording the contents data such as the music data downloaded from a server 25, an operation means 6 such as a button, key-board, mouse, a display means 5a such as LCD, CRT, and a pronunciation means 5b such as a speaker.

When the function of the above information recording apparatus 1 is shown by the block diagram, it becomes Fig. 7. That is, the apparatus provides with an input output means 11 such as a display means 5a or an operation means, a pronunciation means 5b, an identifying means 12 for reading the utilization license information from the loaded recording medium 9, and for identifying whether the recording medium is a recording medium for which the download of the music data is permitted, a network connection means 14 for connecting to a server 25 in which the music data is stored, through a communication network 24, and a music data obtaining means 13 such as a download requiring means 15a for requiring the download to the server 25, a data recording means 18 for recording the downloaded music data in the recording medium 9 loaded into the recording medium loading section 4, a recording means 19, and at need, a copy prevention data generation means 17 for generating the copy prevention data for preventing the copy of the music data.

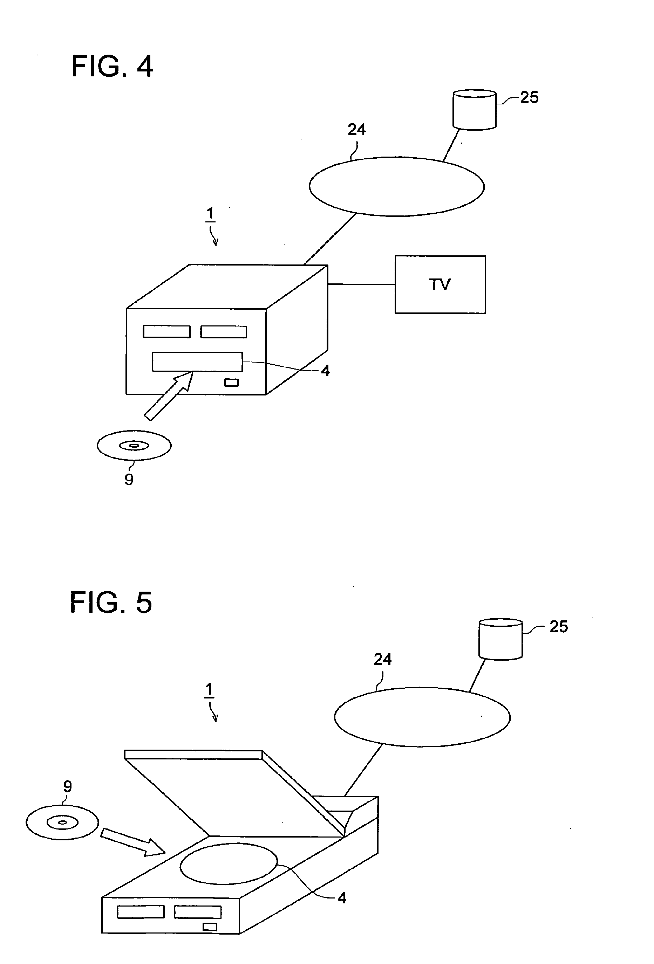

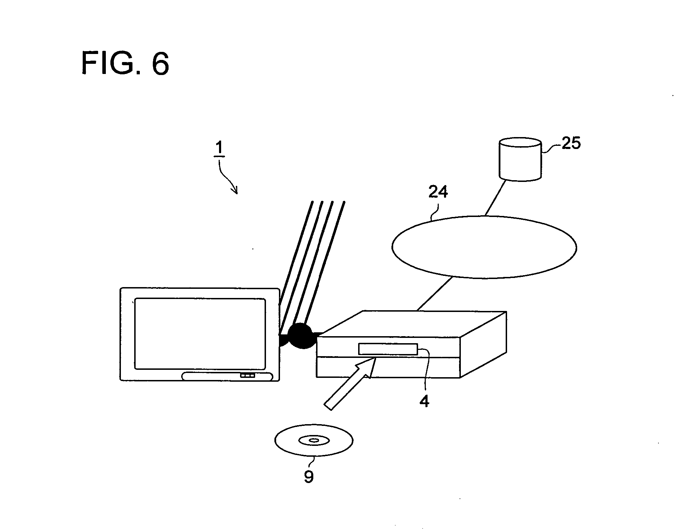

Hereupon, the above each means may also be structured as the hardware, however, a computer may also be, at least, structured as the control program for functioning it as the identifying means 12 and the music data obtaining means 13, and for installing the program in the information recording apparatus 1, and for functioning as the above means. Further, in Fig. 1, a case where the personal computer is used as the information recording apparatus 1, is shown, however, the structure of the information recording apparatus 1 is arbitrary, for example, as shown in Fig. 2, it may also be structured as a kiosk type which can be placed in a photographic shop or a shop such as a convenience store, or as shown in Fig. 3, a home server provided with a recording means such as HDD, HDD recorder or DVD recorder, game machine, as shown in Fig. 4, an exclusive set top box, as shown in Fig. 5, a portable writer, or as shown in Fig. 6, a navigation device provided with the recording means such as HDD.

Referring to a flowchart in Fig. 8, the sequence for downloading the music data by using the information recording apparatus 1 structured as above, will be described.

Initially, in step S101, the user buys the recording medium 9 shown in a show case 21 in a shop such as the photographic shop or convenience store. In this recording medium 9, the utilization license information for permitting the download of a predetermined musical composition or the music data of a predetermined number of musical composition from the server 25 is recorded. This utilization license information is allowable when the recording medium 9 is a recording medium for which the information recording apparatus 1 can identify that the recording medium 9 is a recording medium for which the download of the music data of a predetermined musical composition or a predetermined number of musical composition is permitted, and the structure is arbitrary, however, for example, the information such as the identification information of the recording medium 9 or the number of music for which the download is permitted, name of music, can be included. Further, a structure in which, in the utilization license information, only the identification information of the recording medium 9 is recorded, in the recording means 19 of the information recording apparatus 1, the correspondent information is stored, and referring to the corespondent information, the number of music or the name of music is specified, may also be applied. Hereupon, because this utilization license information is provided for permitting the download in the recording medium 9 which is purchased normally, when the recording location of the utilization license information or the content is easily known, there is a possibility that the utilization license information is altered. In such a case, the utilization license information can also be written in the outside of the logical address, specifically, in a area inside of the logical address area of the disc type recording medium.

Next, in step S102, the user loads the purchased recording medium 9 into the recording medium loading section 4 of the information recording apparatus 1 such as the kiosk placed in the shop, or the personal computer in the home. Then, in step S103, the identification means 12 reads the utilization license information from a predetermined area of the recording medium 9.

Next, in step S104, the identification means 12 identifies it whether the recording medium is a recording medium for which the download is permitted. Then, when it is judged that it is a recording medium for which the download is not permitted, a series of processing comes to an end. Further, when it is judged that it is a recording medium for which the download is permitted, the musical composition to be downloaded is selected.

Herein, as a download mode of the music data, there is a case where the music composition to be downloaded is previously designated, and only the designated music isz downloaded, and a case where only the number of the music composition which can be downloaded is set, and the user is made to select the music composition. Accordingly, in step S105, the identification means 12 judges by referring to the utilization license information whether the music composition can be selected, and when the music composition is previously designated, the selection of the music composition is skipped, and when the music composition can be selected, the user is made to select the music composition.

Hereupon, a method for making the user select the music data is arbitrary, for example, the musical composition information such as the name of the music is previously recorded in the memory means 19, the musical composition information is displayed on the display means 5a and the user may also be made to select it by the operation means 6, or a list of names of the musical composition which can be downloaded, is attached to the recording medium 9 and sold, and the information (for example, the number of the musical composition) specifying the musical composition selected from the list may also be inputted by the operation means 6, or it may also be allowable that the information recording apparatus 1 is automatically connected to the server 25 by using the network connection means 14, the music composition name which can be downloaded is obtained from the server 25 and displayed in selectable manner on the display means 5a, or the selectable musical composition name is recorded in the recording medium 9, and the musical composition name information is read from the recording medium 9 and displayed on the display means 5a in a selectable manner.

Then, when the selection of the music composition came to end, in step S107, the music data obtaining means 13 makes access to the server 25 in which the music data to be downloaded is recorded by the network connection means 14, and requires the download of a desirable music data to the server 25 by using the download requiring means 15a. To this requirement of the download, for example, the information for identifying the information recording apparatus 1 to be connected to the server 25 or the information for specifying the music data for which the download is required, is transmitted to the server 25.

Then, in step S108, the server 25 for which the download is required, refers to the information transmitted from the information recording apparatus 1 and identifies the information recording apparatus 1, and when the server 25 judges it as the regular requirement, the server is connected in a manner which can download, and downloads the designated music data to the information recording apparatus 1.

Then, when the download is completed, in step S109, the data recording means 18 records the downloaded music data in a predetermined area of the recording medium 9. In that case, the music data is the data for which the download is permitted only one time in a specific recording means to the specific user, and it is necessary to prevent the unfair copy, however, when the music data is recorded in a format (WAV, WMA, MP3, atrack format, CD-Audio format, DVD-Audio format) which can be reproduced in a personal computer or music reproduction device, the music data can be copied in HDD or the other recording medium, and the disadvantage is generated.

Accordingly, in step S110, at need, the dummy data (copy prevention data) of a format which OS of the personal computer can not recognize is recorded together with the music data, and a function to identify the copy prevention data is provided in the program by which the music data is reproduced or recorded, and in the case where it is made so that the music data can be used, only when the copy prevention data is recorded in the logical address area, the unfair copy of the music data can be effectively prevented.

Hereupon, the above sequence is the structure of a case where the downloadable music data are collectively downloaded, however, there is also a case where a part of the musical composition s for which the download is permitted, is downloaded, or a case where, for downloading the newest musical composition , the download is desired in such a manner that the download time is divided into several times. In that case, the processing is conducted according to the flowchart of Fig. 9. Initially, in the same manner, in step S201, the recording medium 9 in which the utilization license information by which the music data of previously a predetermined musical composition or a predetermined number of musical composition s can be downloaded from the server 25 is recorded, is purchased. Next, in step S202, when the purchased recording medium 9 is loaded into the recording medium loading section 4 of the information recording apparatus 1, in step S203, the identification means 12 reads the utilization license information from a predetermined area of the recording medium 9 and judges whether the recording medium 9 is a recording medium for which the download is permitted. Then, in step S204, when it is not a recording medium for which the download is permitted, a series of processing comes to an end, and when it is a recording medium 9 for which the download is permitted, in step S205, it is judged whether the download can be conducted. Specifically, the identification means 12 reads the information of the music data recorded medium 9, checks whether the music data specified by the utilization license information, or the music data specified by the information corresponded to the utilization license information is already recorded in the recording medium 9, and when the downloadable music component remains, it is judged that the music data can be downloaded. Further, at the time of the download of previous time, when the information relating to the downloaded music data is recorded in the recording medium 9, the information may also be read and judged whether it can be downloaded. Then, when it can be downloaded, in the same manner as the above described sequence in step S206, the selection of the musical compositions to be downloaded is conducted.

Next, when the selection of the musical composition is completed, in step S207, the music data obtaining means 13 makes access to the server 25 in which the music data to be downloaded is recorded, by using the network connection means 14, and requires the download to the server 25 by using the download require means 15a, and in step S208, the server 25 to which the download is required, refers to the information transmitted from the information recording apparatus 1 and identifies the information recording apparatus 1, and when it is judged that the request is a regular request, it downloads the designated music data in the information recording apparatus 1.

Then, when the download is completed, in step S209, the data recording means 18 records the downloaded music data in a predetermined area of the recording medium 9. In that case, for preventing the unfair copy, the copy prevention data of a format which can not be recognized by OS of the personal computer may also be recorded in a logical address area together with the music data.

In this manner, according to the structure of the present example, the utilization license information showing that the download of the music data of a predetermined music composition or a predetermined numerical amount of music compositions is permitted, is previously recorded in the recording medium 9, and because the information recording apparatus 1 reads, when the recording medium 9 is loaded, the utilization license information from the recording medium 9, and the predetermined or user selected music data is automatically downloaded from the server 25 and recorded in the Recording medium 9, according to the indication of the information recording apparatus 1, by only selecting the musical composition, the recording medium 9 in which a desired music data is recorded, can be obtained.

### [Example 2]

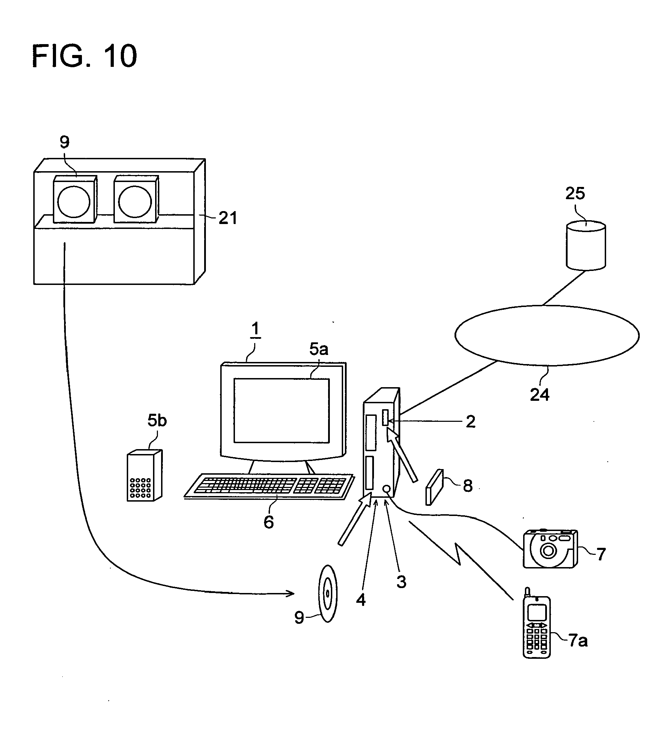

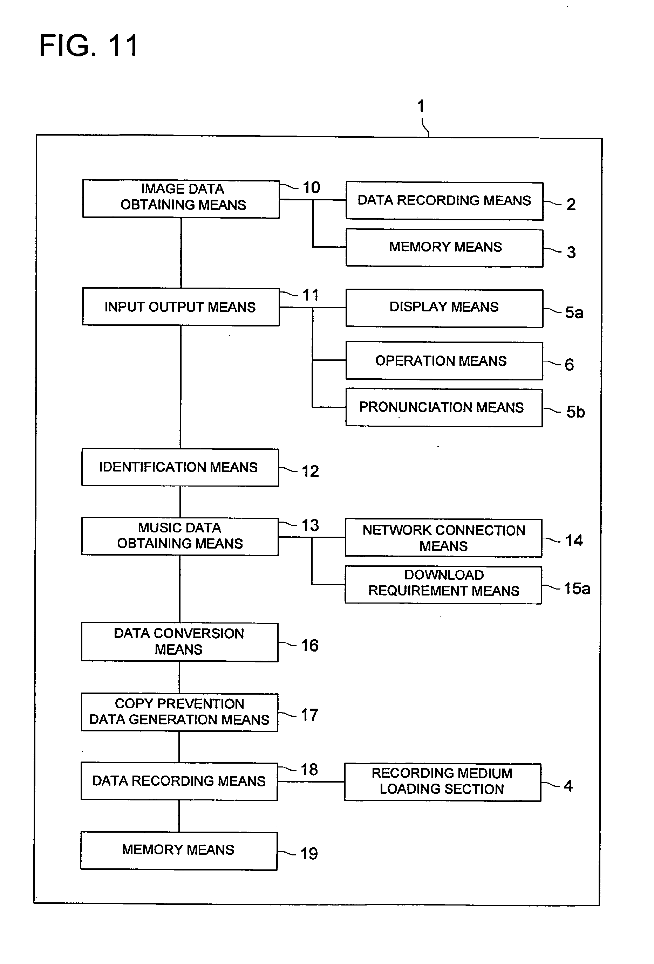

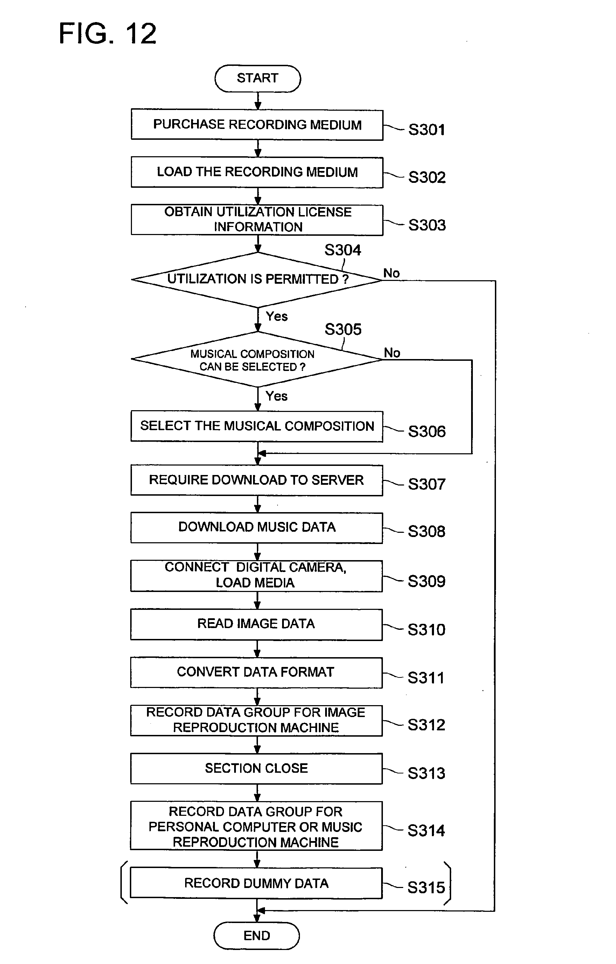

Next, an information recording apparatus and control program and recording medium, according to the second example of the present invention, will be described referring to Fig. 10 to Fig. 12. Fig. 10 is a view typically showing the structure of the information recording apparatus according to the present example, Fig. 11 is a block diagram showing the function of the information recording apparatus. Further, Fig. 12 is a flowchart showing a sequence of the download of the music data of the present example.

In the above described first example, in the recording medium 9, the structure in which only the downloaded music data is recorded, is described, however, when it is recorded in combination with the image data obtained by the digital camera, as the slide-show having the music, the image data can be enjoyed, and the utilization acceleration of services concerning to the image data can be intended. Accordingly, the present example is characterized in that, together with the download of the music data, the image data is inputted, and they are recorded as they are, or after converted into a predetermined format data, in the recording medium 9.

The information recording apparatus 1 of the present example is provided with the network connection means for connecting to the server 25 though the communication network 24 such as internet, the media loading section 2 for loading the recording medium (hereinafter, called media 8) such as a smart media, compact flash (trade mark), memory stick (trade mark), Sd memory card, multimedia card, an image data obtaining means such as the device connection section 3 for connecting the photographic device such as the digital camera 7 (both of the digital still camera and the digital movie camera are included)or the cell phone with a camera 7a, by the wire or the wireless, or the infrared ray, the recording medium loading section 4 for loading the recording medium 9 in which the music data downloaded from the server 25 and the image data (still image data or moving image data, data partially including the image information, are genetically named the image data) read from the media 8 or digital camera 7 are recorded, such as CD-R/RW, or DVD R/RW, DVD-RAM, Blue-ray disk, the operation means 6 such as the button, key-board, mouse, or the display means 5a such as LCD, CRT, and the pronunciation means 5b such as the speaker.

When the function of the above information recording apparatus 1 is shown by the block diagram, it is shown as Fig. 11. That is, the information recording apparatus 1 has the image data obtaining means 10 for inputting the image data by using the media loading section 2 or the device connection section 3, the input output means 11 such as the display means 5a or the operation means 6, the pronunciation means 5b, the identification means 12 for reading the utilization license information from the loaded recording medium 9, and for identifying whether the recording medium is a recording medium for which the download of the music data is permitted, and the music data obtaining means 13 such as the network connection means 14 for connecting to the server 25 in which the music data is stored through the communication network 24 and the download requiring means 15a for requiring the download to the server 25, the data conversion means 16 for making the moving image data by using the downloaded music data and the inputted image data, the data recording means 18 for recording the inputted music data or image data, moving image data is recorded in the recording medium 9 loaded in the recording medium loading section 4, the memory means 19, and, at need, the copy prevention data generation means 17 for preventing the copy of the music data.

Hereupon, also in the present example, each of the above means may also be structured as the hardware, however, the computer may also be structured as a control program for functioning the computer at least as the identification means 12, music data obtaining means 13, data conversion means 15, and the program may also be structured so as to be installed into the information recording apparatus 1 and functioned as the above each means. Further, the structure of the information recording apparatus 1 is arbitrary, and may also be applied as the personal computer, kiosk type which can be placed in the photographic shop or the shop such as the convenience store, the home server provided with the recording means such as HDD, HDD recorder or DVD recorder, the game machine, or the exclusive set top box, portable writer, or the navigation device provided with the recording means such as HDD.

Referring to the flowchart of Fig. 12, the sequence for downloading the music data by using the information recording apparatus 1 structured as above, will be described.

Initially, in step S301, the recording medium 9 in which the utilization license information by which the desired music data can be downloaded from the server 25 is recorded is purchased, and in step S302, when the purchased recording medium 9 is loaded into the recording medium loading section 4 of the information recording apparatus 1, in step S303, the identification means 12 reads the utilization license information from a predetermined area of the recording medium 9, in step S304, and identifies whether the recording medium is a recording medium for which the download is permitted, based on the utilization license information. Then, when it judges that the recording medium is a recording medium for which the download is not permitted, a series of processing comes to end, and when it judges that the recording medium is a recording medium for which the download is permitted, in step S305, it judges whether the musical compound can be selected, and when the musical compound can be selected, (that is, when only the number of downloadable components is designated), in step S306, in the same manner as sequence described above, the musical composition to be downloaded is selected.

Next, when the selection of the musical composition came to end, in step S307, the music data obtaining means 13 makes access to the server 25 in which the music data to be downloaded is recorded, by using the network connection means 14, and requires the download of the desired music data to the sever 25 by using the download requirement means 15a, in step S308, the server 25 to which the download is required, refers to the information transmitted from the information recording apparatus 1, and identifies the information recording apparatus 1, and when it is judged that the requirement is regular, the designated music data is downloaded in the information recording apparatus 1.

Then, when the download is completed, the image data is read. Specifically, in step S309, media 8 is loaded into the media loading section 2 of the information recording apparatus 1, or the digital camera 7 is connected to the device connection section 3, and in step S310, by using the image data obtaining means 10, the image data stored in a predetermined area of the digital camera 7 or media 8 is read.

Herein, the downloaded music data and inputted image data may also be recorded as it is, in the recording medium 9, however, when the image data and the music data are combined, the image data can also be displayed as the slide-show with music, and the value of the recording medium 9 can also be enhanced. Accordingly, in step S311, the data conversion means 16 is used at need, and the read image data (herein, still image data) is converted into the another format data (herein, the data of Video-CD format which can be read by the image reproduction device such as DVD player or DVD recorder, game machine, DVD-Video format, HDTV format). A method for making the moving image data from the still image data is not particularly limited, however, for example, when the still image data is displayed in a manner of the slide-show, the data of the difference 0 for the slide display time is added to the still image data and the moving image data is generated, or the difference data based on the slide effect set by the slide-show program is added to the still image data and the moving image data can be generated. Further, for the image data, the image data previously recorded in the information recording apparatus 1 may also be used.

Hereupon, the image data or the music data can be copied as it is, in the personal computer, however, when the moving image data of Video-CD format or DVD-Video format, HDTV format is made, because the moving image data can not be copied in the personal computer, when the structure by which the moving image data is recorded instead of the music data is applied, there is also the effect for preventing the unfair copy.

Next, the downloaded music data, inputted image data, made moving image data are recorded in the recording medium 9, however, in that case, in the personal computer or music reproduction machine, the data can be reproduced irrespective of the recording position, however, in the image reproduction machine, when the data is not recorded in the predetermined recording position, it can not be reproduced. Accordingly, in step S312, the moving image data made in the data conversion means 16 or the related data (hereinafter, they are generally called the data group for the image reproduction machine) is transferred to a predetermined folder for writing which is previously provided in the recording means 19. Then, the data recording means 18 reads the data group for the image reproduction machine from the folder, records inside the logical address area of the recording medium 9.

Next, in step S313, the data recording means 18 closes once, before the data for the personal computer or the music reproduction machine is recorded, the session, for separating the area of data usable in the image reproduction machine.

Next, in step S314, the downloaded music data, inputted image data, application for slide-displaying the image data, setting file of the slide-show, (hereinafter, they are generally called the data group for the personal computer or music reproduction machine), are transferred to a predetermined folder for writing, which is previously provided in the recording means 19. Then, the data recording means 19 reads the data group for the personal computer or music reproduction machine from the folder, and records outside the data group for the image reproduction machine which are precedently recorded in the recording medium 9. In that case, together with the music data or the image data, the copy prevention data which is not recognized by OS of the personal computer, may also be recorded in the logical address area at need.

Hereupon, the above sequence is the structure of a case where the downloadable music data is collectively downloaded, however, there also be a case where a part of the number of music for whom the download is permitted, is downloaded, or a case where, for downloading the newest music, it is desired that download is conducted in several separated times. In that case, the processing may be conducted in the same manner as Fig. 9 of the first example. Further, in Fig. 12, after the music data is downloaded, the image data is read, however, the timing of reading of the image data is arbitrary, after the image data is read, the music data may also be downloaded.

As described above, according to the structure of the present example, in the recording medium 9, the utilization license information showing that the download of the music data of a predetermined music composition or a predetermined numeral quantity of musical composition is permitted is previously recorded, and when the recording medium 9 is loaded, the information recording apparatus 1 reads the utilization license information from the recording medium 9, downloads a preset music data or the music data which is selected by the user, from the server 25, and reads the image data from the digital camera 7 or media 8, and because the apparatus 1 makes the moving image data by using at need the music data and the image data, and records in the recording medium 9, the user can obtain the recording,medium 9 in which a desired music and user's image are combined.

### [Example 3]

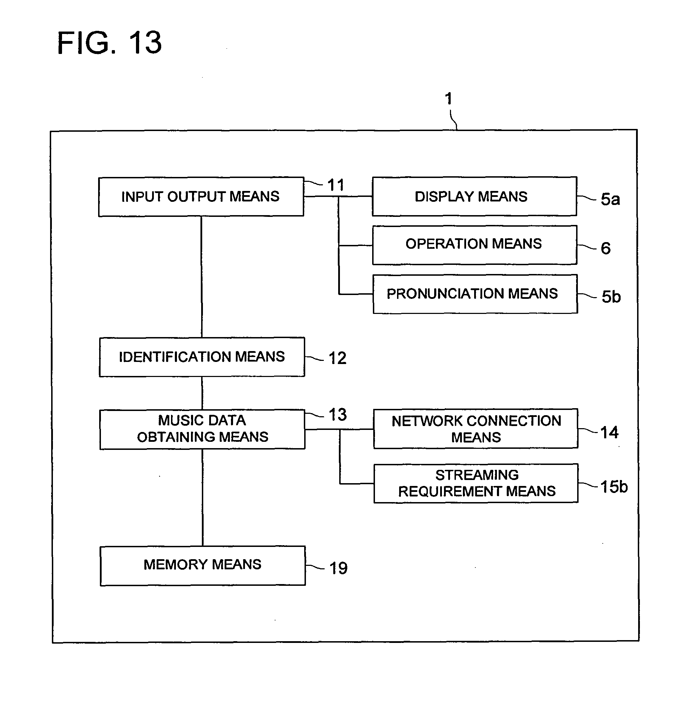

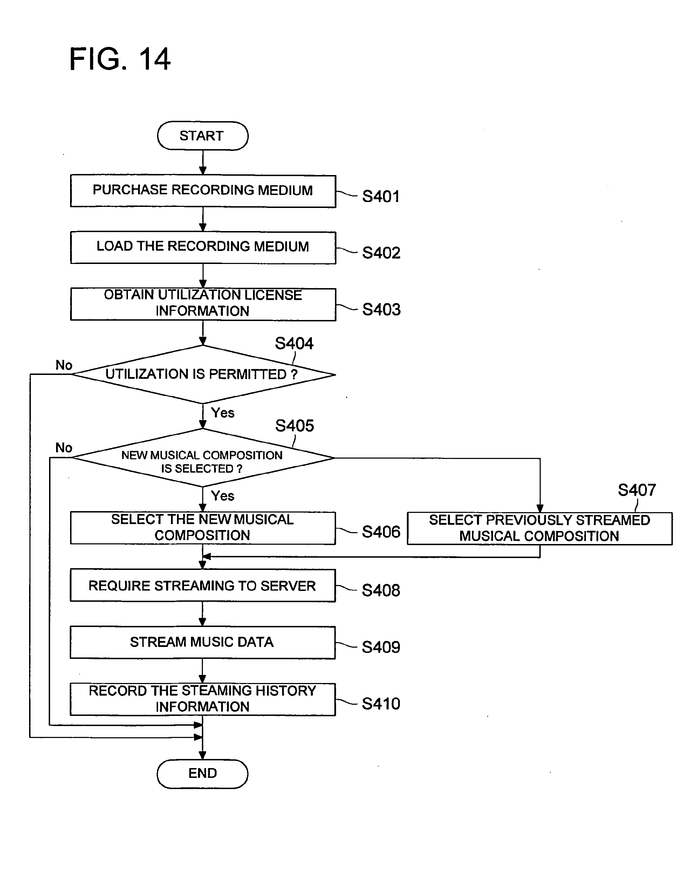

Referring to Fig. 13 and Fig. 14, the information recording apparatus, control program and recording medium, according to the third Example of the present invention, will be described. Fig. 13 is a block diagram showing a function of the information recording apparatus, and Fig. 14 is a flowchart showing the streaming sequence of the music data of the present example.

In the above-described first and second examples, the structure in which, after the music data is downloaded from the server 25, it is recorded in the recording medium 9, is applied, however, as the using method of the music data, there is also a using method by which the music data is not recorded, and the music data transmitted from the server 25 is reproduced at the place, and called so-called streaming. Also in this case, the music data can be simply used by using the recording medium or the information recording apparatus. Hereinafter, the specific structure will be described.

The appearance structure of the information recording apparatus 1 of the present example is the same as the first example, and as its structure, the apparatus 1 is provided with, as in Fig. 13, the display means 5a for selecting the musical composition to be streamed, or the operation means 6, the input output means 11 such as the pronunciation means 5b for reproducing the music data, and the identification means 12 for reading the utilization license information from the loaded recording medium 9, and for identifying whether the recording medium is a recording medium for which the streaming of the music data is permitted, the music data obtaining means 13 such as the network connection means 14 for connecting to the server 25 in which the music data is stored, through the communication network 24, and the streaming requirement means 15b for requiring the streaming to the server 25, and the memory means 19 for storing the information specifying the streamed music data.

Hereupon, in the same manner as in the first and the second examples, the above-described each means may also be structured as the hardware, however, at least, the computer may also be structured in such a manner that it is structured as the control program for functioning as the identification means 12 and the music data obtaining means 13, and the program is installed in the information recording apparatus 1 and functioned as the above-described means. Further, the structure of the information recording apparatus is arbitrary, and also be applied as the personal computer, kiosk type installable in the shop such as the photographic shop or convenience store, home server provided with the recording means such as HDD, HDD recorder or DVD recorder, game machine, exclusive set top box, portable writer, navigation apparatus provided with the recording means such as HDD.

Referring to the flowchart in Fig. 14, the sequence for streaming the music data by using the information recording apparatus structured as above, will be described.

Initially, in step S401, the user purchases the recording medium 9 in which the utilization license information by which the desired music data can be streamed, is recorded, in step S402, when the purchased recording medium 9 is loaded into the recording medium loading section 4 of the information recording apparatus 1, in step S403, the utilization license information is read from a predetermined area of the recording medium 9, in step S404, it is identified whether the recording medium is a recording medium for which the streaming is permitted based on the utilization license information. Then, when it is judged that it is the recording medium for which the streaming is not permitted, a series of processing comes to end. Further, when it is judged that it is the recording medium for which the streaming is permitted, in step S405, it is judged whether a new musical composition is selected. Herein, in the case of the streaming, because the musical composition selected once can be used at any times, when a new musical composition is selected, in the same manner as described in step S406, the musical composition to be streamed is selected, and when a new musical composition is not selected, in step S407, a desired musical composition is selected from among the musical compositions which are previously streamed.

Next, when the selection of the musical composition is completed, in step S408, the music data obtaining means 13 makes access to the server 25 in which the music data to be streamed is recorded, by using the network connection means 14, and requires the streaming by using the streaming requirement means 15b. Then, in step S409, the server 25 to which the streaming is required, identifies the information recording apparatus 1, referring to the information transmitted from the information recording apparatus 1, and when it is judged that the requirement is regular one, the designated music data is made a condition in which the streaming is possible, and reproduced in the pronunciation means 5b.

Then, when the streaming is completed, in step S410, the data recording means 18 records the information for specifying the streamed music data in the recording medium 9 as the history information.

As described above, according to the structure of the present example, in the recording medium 9, the utilization license information showing that the streaming of the music data of a predetermined musical composition or a predetermined numeral quantity of musical compositions is permitted is previously recorded in the recording medium 9, and the information recording apparatus 1 reads, when the recording medium 9 is loaded, the utilization license information from the recording medium 9, and because the music data which is previously set or selected by the user is streamed and pronounced by the pronunciation means, by only selecting the composition according to the indication of the information recording apparatus 1, the desired music data can be reproduced by the information recording apparatus 1.

### [Example 4]

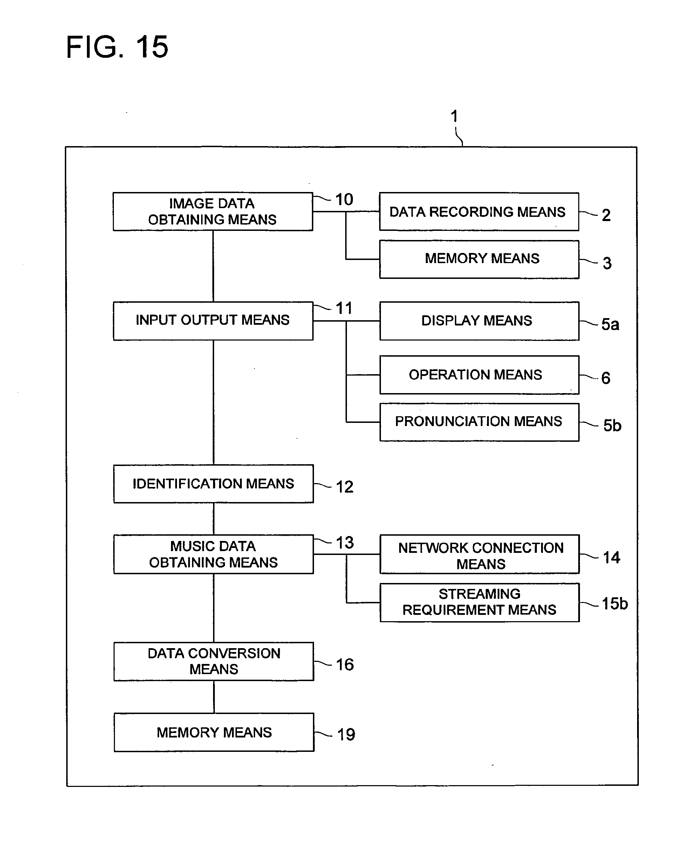

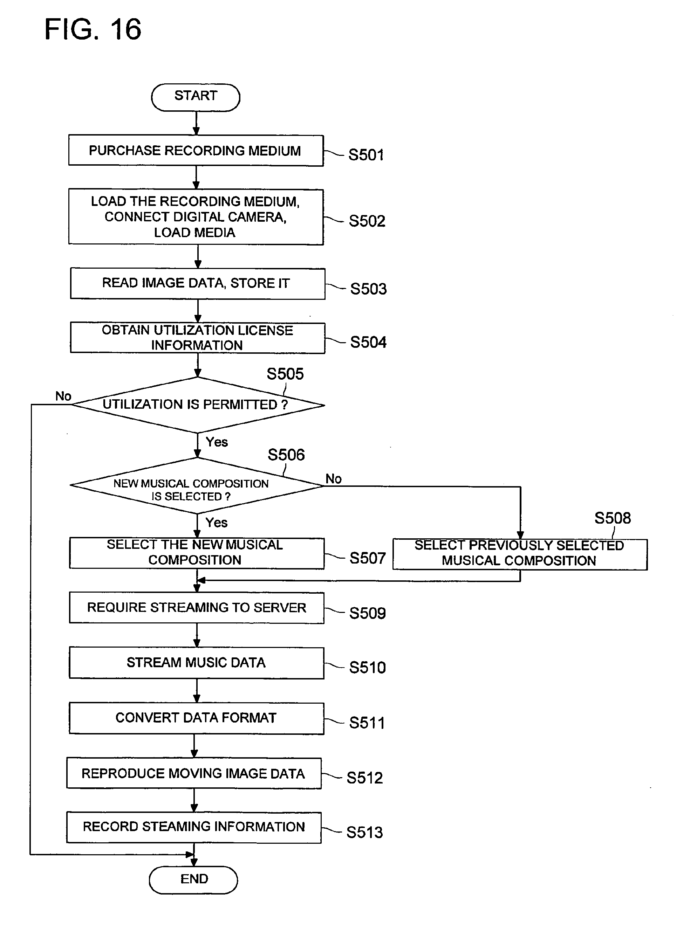

Referring to Fig. 15 and Fig. 16, the information recording apparatus and the control program and the recording medium according to the fourth example of the present invention will be described. Fig. 15 is a block diagram showing the function of the information recording apparatus according to the present example, and Fig. 16 is a flowchart showing the streaming sequence of the music data of the present example.

In the above-described third example, the structure for streaming only the music data is applied, however, in the same manner as in the second example, when the music data is combined with the image data obtained by the digital camera and reproduced, the image data can be enjoyed with the music, and the promotion of utilization of the service related to the image data can be intended. Accordingly, in the present example, it is characterized in that, together with the streaming of the music data, also the moving image data made based on the image data and music data is simultaneously reproduced.

The appearance structure of the information recording apparatus 1 of the present example is the same as the first to the third example, the function is as shown in Fig. 15, and the apparatus 1 is provided with the image data obtaining means 10 for inputting the image data by using the media loading section 2 or the machine connection section 3, the input output means 11 such as the display means 5a or the operation means 6, the pronunciation means 5b, the identification means 12 for reading the utilization license information from the loaded recording medium 9, and for identifying whether the recording medium is a recording medium for which the streaming of the music data is permitted, the music data obtaining means 13 such as the network connection means 14 for connecting to the server 25 in which the music data is stored, through the communication network 24, and the streaming requirement means 15b for requiring the streaming to the server 25, the data conversion means 16 for making the moving image data by using the downloaded music data and the inputted image data, and the memory means 19 for storing the information relating to the streamed music data.

Hereupon, also in the present example, the above-described each means may also be structured as the hardware, however, the computer is at least structured as the control program for functioning it as the identification means 12, the music data obtaining means 13, the data conversion means 16, and a structure in which the program is installed in the information recording apparatus 1 and functioned as the above means, may also be applied. Further, the structure of the information recording apparatus 1 is arbitrary, it may also be structured as a personal computer, a kiosk type which can be placed in a photographic shop or a shop such as a convenience store, or a home server provided with a recording means such as HDD, a HDD recorder or DVD recorder, game machine, or an exclusive set top box, a portable writer, or a navigation device provided with the recording means such as HDD.

Referring to the flowchart of Fig. 16, the sequence for downloading the music data by using the information recording apparatus 1 structured as above, will be described.

Initially, in step S501, the recording medium 9 in which the utilization license information by which the desired music data can be streamed is recorded is purchased, and in step S502, simultaneously with a time when the purchased recording medium 9 is loaded into the recording medium loading section 4 of the information recording apparatus 1, the media 8 is loaded into the media loading section 2 of the information recording apparatus 1, or the digital camera 7 is connected to the machine connection section 3. Next, in step S503, by using the image data obtaining means 10, the image data stored in the digital camera 7 or a predetermined area of the media 8 is read. Hereupon, when the image data is previously recorded in the information recording apparatus 1, the image data can also be used.

Further, in step S504, the identification means 12 reads the utilization license information from a predetermined area of the recording medium 9, in step S505, and identifies whether the recording medium is a recording medium for which the streaming is permitted, based on the utilization license information, and when it judges that the recording medium is a recording medium for which the streaming is not permitted, a series of processing comes to end. Further, when it judges that the recording medium is a recording medium for which the streaming is permitted, in step S506, it judges whether the new musical compound is selected. Herein, in the case of the streaming, because the musical composition once can be used at any number of times, when a new musical composition is selected, in step S507, in the same manner as sequence described above, the musical composition to be streamed is selected, and when a new musical composition is not selected, in step S508, a desired musical composition is selected from among the musical compositions which are previously streamed.

Next, when the selection of the musical composition came to end, in step S509, the music data obtaining means 13 makes access to the server 25 in which the music data to be streamed is recorded, by using the network connection means 14, and requires the streaming by using the streaming requirement means 15b. Then, in step S510, the server 25 to which the streaming is required, refers to the information transmitted from the information recording apparatus 1, and identifies the information recording apparatus 1, and when it is judged that the requirement is regular, the designated music data is made a condition in which the streaming is possible.

Then, when the streaming is started, simultaneously with a time when the music data is reproduced in the pronunciation means 5b, in step S511, the data conversion means 16 makes a predetermined format data by using the music data transmitted from the server 25 and the inputted image data, and in step S512, displays on the display means 5a. Then, the information specifying the music data streamed in step S513, is recorded in the recording medium 9 as the history information.

As described above, according to the structure of the present example, the utilization license information showing that the streaming of the music data of a predetermined number of musical compositions is permitted, is previously recorded in the recording medium 9, and the information recording apparatus 1, when the recording medium 9 is loaded, reads the utilization license information from the recording medium 9, and simultaneously with a time when a preset or music data selected by the user is streamed, reads the image data from the digital camera or media, because the moving image data is made by using the music data and the image data, and reproduced, the user can enjoy a desired music and user's image simultaneously, hereby, the promotion of the utilization of the service related to the photographic image or related to the music can be intended.

Hereupon, in the above each example, the structure by which the music data is downloaded or streamed, is described, however, the present invention is not limited to above-described examples, and also for the download or streaming of arbitrary data which can be delivered from the server, it can be applied in the same manner.

### INDUSTRIAL APPLICABILITY

According to the information recording apparatus and recording program and recording medium of the present invention, the music data can be simply used, or the unfair copy of the downloaded music data can be securely prevented.

The reason is that, in the recording medium, the utilization license information showing that the recording medium is a recording medium for which the utilization of the music data is permitted, is recorded, the information recording apparatus reads the utilization license information from the recording medium, and identifies the recording medium whether the utilization of the music data is permitted for it, and when it is the recording medium for which the utilization of the music data is permitted, the apparatus is automatically connected to the music delivery server, and requires the download or streaming of a predetermined or the user-select music data, and when downloaded, the predetermined format data made by using the music data or the image data inputted together with the music data, is recorded in the recording medium. The reason is because, hereby, the user purchases the recording medium for which the utilization of a desired musical composition is permitted, and by selecting the musical composition, a desired music data can be used. Further, in the case where the download is conducted, when the music data is converted into the data of the format which can not be copied by the personal computer, and recorded, or the copy prevention data for operating the specific program is recorded, the unfair copy of the music data can be prevented.

Hereby, the promotion of the utilization of the service in which the image data and the music data are blended, can be intended.

## Claims

1. A recording medium in which the utilization license information showing that the download or streaming of the music data stored in a specific server is permitted is recorded.

2. A control program for functioning the computer as a means for reading the utilization license information recorded in the recording medium, and for identifying whether the recording medium is a recording medium for which the download of the music data stored in the specific server is permitted, and when the recording medium is a permitted recording medium, as a means for requiring to the server the download of the music data.

3. The control program written in claim 2, wherein it further functions the computer as a means for inputting the image data, a means for making a predetermined format of moving image data based on the downloaded music data and the image data, and a means for recording at least one of the music data, the image data and the moving image data in the recording medium.

4. The control program written in claim 3, wherein the recording means records a dummy data for operating a specific program which reproduces the music data.

5. The control program written in claim 2, wherein it further functions the computer as a means for selecting the music data to be downloaded or streamed from among the music data recorded in the server.

6. The control program for functioning the computer as the means for reading the utilization license information recorded in the recording medium, and for identifying whether the recording medium is a recording medium for which the streaming of the music data stored in the specific server is permitted, and when the recording medium is a permitted recording medium, as a means for requiring to the server the streaming of the data.

7. The control program written in claim 6, wherein it further functions the computer as a means for storing the history information for specifying the streamed music data, and as a means for permitting the streaming to the music data specified by the history data.

8. The control program written in claim 6, wherein it further functions the computer as a means for selecting the music data to be downloaded or streamed from among the music data stored in the server.

9. The control program for functioning the computer as the means for receiving the utilization license information showing that the download or streaming of the specific music data stored in a specific server is permitted, and as a means for connecting the specific server to the transmission original location of the utilization license information so that the download or streaming of the specific music data can be performed.

10. An information recording apparatus is at least provided with a means for reading the utilization license information recorded in the recording medium, and for identifying whether the recording medium is a recording medium for which the download of the music data stored in the specific server is permitted, and when the recording medium is a permitted recording medium, a means for requiring to the server the download of the music data, and a means for recording the downloaded music data in the recording medium.

11. The information recording apparatus written in claim 10 wherein it is provided with a means for making a predetermined format of moving image data based on the downloaded music data and the inputted image data, and in the recording means, at least one of the music data and the image data and the moving image data is recorded in the recording medium.

12. The information recording apparatus written in claim 10 wherein in the recording means, a dummy data for operating a specific program which reproduces the data, is recorded.

13. The information recording apparatus written in claim 9 wherein it is provided with a means for selecting the music data to be downloaded or streamed from among the music data stored in the server.

14. The information recording apparatus is at least provided with a means for reading the utilization license information recorded in the recording medium, and for identifying whether the recording medium is a recording medium for which the streaming of the music data stored in the specific server is permitted, and when the recording medium is a permitted recording medium, a means for requiring the streaming of the music data to the server, and a means for reproducing the music data transmitted from the server in the reproduction means.

15. The information recording apparatus written in claim 14, wherein it is provided with a means for storing the history information specifying the streamed music data, and a means for permitting the streaming to the music data specified by the stored history information.

16. The information recording apparatus written in claim 14, wherein it is provided with a means for making a predetermined format of moving image data based on the streamed music data and the inputted image data, and a means for simultaneously reproducing the moving image data in the reproduction means.

17. The information recording apparatus written in claim 14, wherein it is provided with a means for selecting the music data to be downloaded or streamed from among the music data stored in the server.
